# EUROPÄISCHE PATENTSCHRIFT

(11) **EP 3 531 002 B1**
(45) Veröffentlichungstag und Bekanntmachung des Hinweises auf die Patenterteilung: **21.07.2021**
(21) Anmeldenummer: 18157898.0
(22) Anmeldetag: 21.02.2018
(51) Int. Cl.: F16L 25/00, F24F 13/02

(54) **LUFTLEITUNGSSICHERUNGSELEMENT**
AIR CONDUIT SECURING ELEMENT
ÉLÉMENT DE SÉCURITÉ POUR CONDUITE D'AIR

(43) Veröffentlichungstag der Anmeldung: 28.08.2019
(73) Patentinhaber: Hoval Aktiengesellschaft, 9490 Vaduz (LI)
(72) Erfinder: Merhar, Thomas, 9494 Schaan (LI)
(74) Vertreter: Zenz Patentanwälte Partnerschaft mbB

(56) Entgegenhaltungen:
- EP-A1- 1 103 752
- EP-A1- 1 333 215
- EP-A1- 3 064 849
- DE-U1- 20 117 487

## Beschreibung

Die Erfindung ist auf ein Luftleitungssicherungselement zur lösbaren Befestigung einer rohrförmig und gewellt ausgebildeten Luftleitung an einem Anschlussstutzen eines Lüftungsgehäuses gerichtet.

Aus der DE 201 17 487 U1 ist eine Drahtschutzanordnung bekannt, die ein Anschlussstück, eine Hülse und einen Balg aufweist. Das Anschlussstück hat einen rohrförmigen Abschnitt und einen nach außen verlaufenden Flansch hat, wobei in dem rohrförmigen Abschnitt zwei erste Löcher gebildet sind und von dem inneren Umfang des Anschlussstückes zwei Vorsprünge radial nach innen verlaufen, welche an einem oberen Rand der ersten beiden Löcher angeordnet sind. Die Hülse ist an dem rohrförmigen Abschnitt des Anschlussstückes angebracht und mit zwei zweiten Löchern versehen, wobei die ersten Löcher und die zweiten Löcher miteinander in Berührung stehen, wobei vom Innenumfang der Hülse zwei Haken abgehen, die jeweils mit einer schräg verlaufenden Außenfläche versehen sind, welche unter Ausrichtung in den ersten Lächern und zweiten Lächern angeordnet sind und jeweils einen Endabschnitt haben. Der Balg ist in den rohrförmigen Abschnitt des Anschlussstückes eingesetzt, wobei die Endabschnitte der beiden Haken mit Nuten des Balgs in Eingriff stehen.

Bekanntermaßen wird im Bereich der Wohnraumlüftung ein aus einem Luftverteilsystem und einem Luftabsaugsystem bestehendes Lüftungsnetz im Rohbau eines Wohnhauses eingebaut. Dabei werden an einem Lüftungsgehäuse, welches zum Beispiel im Bereich der kontrollierten Wohnungslüftung eingesetzt wird und als ein Luftauslassgehäuse oder ein Luftverteilergehäuse ausgeführt sein kann, meist ein oder zwei rohrförmig und gewellt ausgebildete Luftleitungen, die auch als Lüftungsrohre bezeichnet werden und als Wellrohre ausgeführt sind, angeschlossen. Dazu werden die Luftleitungen in einen jeweiligen Anschlussstutzen des Lüftungsgehäuses eingeschoben und in einem zusätzlichen Arbeitsschritt gesichert, damit sie während der Rohbauphase bis zum Giesen des Betons nicht aus den jeweiligen Anschlussstutzen herausfallen. Die Sicherung der Luftleitungen erfolgt dabei meist durch Hebel oder Schieber, die den Nachteil aufweisen, dass sie beim Gießen verloren gehen können. Zudem kann die Zugänglichkeit zu Hebeln und Schiebern erschwert sein, wenn beispielsweise bereits Armierungseisen verlegt sind.

Ein Luftleitungssicherungselement zur lösbaren Befestigung einer rohrförmig und gewellt ausgebildeten Luftleitung an einem Anschlussstutzen eines Lüftungsgehäuses und eine Anordnung mit einem solchen Luftleitungssicherungselement und einem Lüftungsgehäuse sind beispielsweise aus der EP 3 064 849 A1 bekannt. Bei dieser Anordnung ist ein Wellrohr in den Anschlussstutzen in eine Einsteckrichtung einsteckbar. Das Wellrohr wird an dem Anschlussstutzen mittels des Luftleitungssicherungselements gesichert, wobei das Luftleitungssicherungselement als ein Sicherungsbügel mit zwei einander gegenüberliegenden Bügelarmen ausgebildet ist, welche im montierten Zustand den Anschlussstutzen umgreifen. Der Sicherungsbügel bzw. das Luftleitungssicherungselement ist elastisch ausgebildet und weist Sicherungsnasen auf, welche im montierten Zustand durch jeweilige Ausnehmungen im Anschlussstutzen hindurch in den Anschlussstutzen hineinreichend elastisch eingeschnappt sind und bei eingesteckter Luftleitung, die rohrförmig und gewellt ausgebildet ist, in ein Wellental der Luftleitung eingreifen. Die Sicherungsnasen weisen jeweilige Anlaufschrägen auf, die schräg bezüglich der Einsteckrichtung sowie einer Senkrechten hierzu orientiert sind, so dass beim Einstecken der Luftleitung in Steckrichtung bei aufgesetztem Luftleitungssicherungselement ein jeweiliger Wellenberg an der Anlaufschräge entlang gleitet und dadurch den Sicherungsbügel aufweitet und die Sicherungsnasen radial nach außen wegdrückt, wobei die Sicherungsnasen durch die Elastizität des Luftleitungssicherungselements automatisch wieder in ein jeweiliges Wellental einschnappen. Von Nachteil bei diesem bekannten Luftleitungssicherungselement ist dessen Aufweitung beim Einstecken einer Luftleitung, wodurch es möglich ist, dass die Sicherungsnasen aus den Ausnehmungen des Anschlussstutzens herausgelangen können und das Luftleitungssicherungselement von dem Anschlussstutzen abgleitet, so dass eine Sicherung der Luftleitung nicht mehr gegeben ist. Um dieser Gefahr entgegenzuwirken, sind Führungsstege auf dem äußeren Umfang des Anschlussstutzens vorgesehen, die als Positionierungshilfe des Luftleitungssicherungselements dienen, die aber auch bei einem Einsteckvorgang ein Abgleiten des Luftleitungssicherungselements beim Aufweiten der Bügelarme verhindern sollen, wodurch aber ein zusätzlicher Produktionsaufwand an dem Anschlussstutzen gegeben ist, welcher die Herstellkosten einer Anordnung aus Lüftungsgehäuse und Luftleitungssicherungselement nachteilig erhöht und den Konstruktionsaufwand durch die verschiedenen, zu berücksichtigen Details erhöht.

Der Erfindung liegt die Aufgabe zugrunde eine Lösung zu schaffen, die auf konstruktiv einfache Weise ein verbessertes Luftleitungssicherungselement bereitstellt, welches eine sichere Fixierung einer rohrförmig und gewellt ausgebildeten Luftleitung an einem Anschlussstutzen eines Lüftungsgehäuses ermöglicht und die aus dem Stand der Technik bekannten Nachteile vermeidet.

Diese vorstehend genannte Aufgabe wird erfindungsgemäß gelöst durch ein Luftleitungselement mit den Merkmalen gemäß dem Patentanspruch 1.

Das erfindungsgemäße Luftleitungssicherungselement dient zur lösbaren Befestigung einer rohrförmig und gewellt ausgebildeten Luftleitung an einem Anschlussstutzen eines Lüftungsgehäuses und weist einen Grundkörper auf, welcher im Querschnitt eine ringförmige Gestalt ausbildet und welcher in einem an dem Anschlussstutzen montierten Zustand den Anschlussstutzen umgreifen und auf diesem aufliegen kann. An dem Grundkörper ist wenigstens ein Festlegungselement angeformt, welches sich von dem Grundkörper aus nach innen erstreckt und welches in dem montierten Zustand zumindest in einer in dem Anschlussstutzen ausgebildeten Durchgangsöffnung liegend und sich an einem Festlegungsabschnitt eines Randes der Durchgangsöffnung abstützend angeordnet sein kann. An dem Grundkörper ist ferner wenigstens ein Rastelement angeformt, welches sich in einer Raststellung, in welcher das wenigstens eine Rastelement in ein Wellental der Luftleitung eingreifen kann, von dem Grundkörper aus nach innen erstreckt und welches sich in dem montierten Zustand durch die Durchgangsöffnung in den Anschlussstutzen hinein erstrecken kann. Das wenigstens eine Rastelement ist an dem Grundkörper über eine Schwenkachse aus der Raststellung in eine mit Bezug auf den Grundkörper axiale Richtung schwenkbar gelagert.

Vorteilhafte und zweckmäßige Ausgestaltungen und Weiterbildungen der Erfindung ergeben sich aus den entsprechenden Unteransprüchen.

Durch die Erfindung wird ein Luftleitungssicherungselement zur lösbaren Befestigung einer rohrförmig und gewellt ausgebildeten Luftleitung an einem Anschlussstutzen eines Lüftungsgehäuses und eine Anordnung mit einem solchen Luftleitungssicherungselement und einem Lüftungsgehäuse zur Verfügung gestellt, die sich durch eine einfache Konstruktion bei gleichzeitig vereinfachter Montage sowie durch eine sichere Fixierung der gewellt ausgebildeten Luftleitung an dem Anschlussstutzen auszeichnen. Dadurch, dass das Luftleitungssicherungselement im Querschnitt eine ringförmige Gestalt ausbildet, umgreift und umschließt es den Anschlussstutzen in seinem an dem Anschlussstutzen montierten Zustand vollumfänglich, wodurch die aus dem Stand der Technik bekannt Gefahr des Abgleitens des Luftleitungssicherungselements von dem Anschlussstutzen beim Einschieben einer gewellt ausgebildeten Luftleitung infolge der Aufweitung des Luftleitungssicherungselements vermieden wird. Das wenigstens eine Festlegungselement, welches sich in eine Durchgangsöffnung des Anschlussstutzens hineinerstreckt und sich an dem Festlegungsabschnitt des Randes der Durchgangsöffnung abstützt, stellt darüber hinaus sicher, dass sich das Luftleitungssicherungselement nicht um den Umfang des Anschlussstutzens verdrehen kann, sondern eine vorbestimmte Lage an dem Anschlussstutzen des Lüftungsgehäuses einnimmt. Im Sinne der Erfindung ist unter einem Lüftungsgehäuse, welches im Bereich der Wohnraumlüftung eingesetzt wird, sowohl ein Luftauslassgehäuse, welches auch als Anschlussgehäuse bezeichnet wird, als auch ein Luftverteilergehäuse zu verstehen, so dass das Lüftungsgehäuse im Fall eines Luftauslassgehäuses wenigstens einen Anschlussstutzen und im Fall eines Luftverteilungsgehäuses eine Vielzahl von Anschlussstutzen aufweist. Im Sinne der Erfindung kann das Lüftungsgehäuse sowohl bei einem Luftverteilsystem als auch bei einem Luftabsaugsystem zum Einsatz kommen, so dass das Luftleitungssicherungselement dazu dient, wenigstens eine gewellt ausgebildete Luftleitung, d.h. ein Wellrohr, an dem Lüftungsgehäuse sicher zu befestigen. Zur sicheren Befestigung greift dabei das wenigstens eine Rastelement in ein Wellental der Luftleitung ein, wobei das wenigstens eine Rastelement erfindungsgemäß über eine Schwenkachse an dem Grundkörper schwenkbar gelagert ist. Die schwenkbare Lagerung ermöglicht es, dass zunächst das Luftleitungssicherungselement an dem Anschlussstutzen befestigt wird, indem das wenigstens eine Festlegungselement in die an dem Anschlussstutzen ausgebildete Durchgangsöffnung eingreift, so dass das Luftleitungssicherungselement einen montierten Zustand einnimmt. Zur Sicherung einer gewellt ausgebildeten Luftleitung wird diese dann in Richtung des Lüftungsgehäuses in den Anschlussstutzen eingesteckt, wobei durch die schwenkbare Lagerung das wenigstens eine Rastelement kein Hindernis beim Einstecken der Luftleitung darstellt, da beim Einsteckvorgang ein Wellenberg der gewellt ausgebildeten Luftleitung das wenigstens eine Rastelement aus dem Einsteckweg der Luftleitung drängt und schwenkt und das wenigstens eine Rastelement dann wieder zurück in ein Wellental der Luftleitung schwenkt. Bei Anordnung des wenigstens einen Rastelements in einem Wellental der Luftleitung ist die Luftleitung dann an dem Lüftungsgehäuse gesichert und befestigt.

In Ausgestaltung des Luftleitungssicherungselements sieht die Erfindung vor, dass das Rastelement relativ zu dem Festlegungselement bewegbar an dem Grundkörper gelagert ist. Während das Rastelement die gewellt ausgebildete Luftleitung an dem Anschlussstutzen fixiert, dient das Festlegungselement dazu, das Luftleitungssicherungselement an dem Anschlussstutzen zu sichern. Im Unterschied zum Stand der Technik, bei welchem ein einziges Element sowohl das Luftleitungssicherungselement an dem Anschlussstutzen sichert als auch die Luftleitung fixiert, sind das Rastelement und das Festlegungselement folglich zwei unterschiedliche Bauteilmerkmale, die an dem Grundkörper ausgebildet sind und durch die das Luftleitungselement flexibel auf unterschiedliche Anschlussstutzen und Luftleitungen anpassbar ist, denn die Konstruktion des Festlegungselements kann unabhängig von der Ausgestaltung des Rastelements geändert werden.

Damit gewährleistet ist, dass das wenigstens eine Rastelement in ein Wellental der gewellt ausgebildeten Luftleitung eingreift, sieht die Erfindung in Ausgestaltung des Luftleitungssicherungselements vor, dass die Schwenkachse eine das Rastelement in der Raststellung haltende oder bei einer aus der Raststellung verschwenkten Anordnung des Rastelements eine das Rastelement in die Raststellung zurückdrängende Rückstellkraft auf das Rastelement ausübend ausgebildet ist.

Zu diesem Zweck kann ein Federelement an der Schwenkachse angeordnet sein. Die Erfindung sieht hingegen in weiterer Ausgestaltung des Luftleitungssicherungselements vor, dass die Schwenkachse als ein Filmscharnier ausgebildet ist. Folglich ist die als ein Filmscharnier ausgebildete Schwenkachse einteilig mit dem Grundkörper und dem wenigstens einen Rastelement ausgebildet, was eine kostengünstige Herstellung des Luftleitungssicherungselement ermöglicht.

Um die Schwenkachse vor einer Beschädigung beim Einsteckvorgang der Luftleitung in den Anschlussstutzen zu schützen, sieht die Erfindung in weiterer Ausgestaltung des Luftleitungssicherungselements vor, dass die Schwenkachse außerhalb des Grundkörpers liegend angeordnet ist. Entsprechend ist es in Ausgestaltung der erfindungsgemäßen Anordnung von Vorteil, wenn in dem montierten Zustand die Schwenkachse außerhalb des Anschlussstutzens liegend angeordnet ist.

Um den Grundkörper an dem Anschlussstutzen verdrehsicher anzubringen, ist für das Luftleitungssicherungselement in weiterer Ausgestaltung vorgesehen, dass das Festlegungselement zwei Festlegungsansätze aufweist, die beabstandet zueinander an dem Grundkörper angeformt sind. Dabei können die zwei Festlegungsansätze für zwei Durchgangsöffnungen des Anschlussstutzens vorgesehen sein. Denkbar ist es aber auch, dass zwei Festlegungsansätze an sich gegenüberliegenden Abschnitten des Randes einer einzigen Durchgangsöffnung anliegend angeordnet sind, um die Verdrehsicherheit des Grundkörpers zu gewährleisten. Entsprechend sieht die Erfindung in Ausgestaltung der Anordnung vor, dass in dem montierten Zustand das Festlegungselement zwei Festlegungsansätze aufweist, die derart beabstandet zueinander an dem Grundkörper angeformt sind, dass die Festlegungsansätze an sich gegenüberliegenden Festlegungsabschnitten des Randes der Durchgangsöffnung anliegen und den Grundkörper verdrehsicher an dem Anschlussstutzen anordnen.

Konstruktiv besonders günstig ist es in Ausgestaltung des erfindungsgemäßen Luftleitungssicherungselements, wenn das Rastelement zwischen den zwei Festlegungsansätzen angeordnet ist. Auf diese Weise lässt sich ein sehr kompakter Grundkörper und ein Luftleitungssicherungselement mit einem geringen Bauraum erstellen.

Das Luftleitungssicherungselement gemäß der vorliegenden Erfindung kann derart elastisch ausgebildet sein, dass es durch Aufweitung über den Anschlussstutzen in seine montierte Position geschoben werden kann. Alternativ dazu sieht die Erfindung in Ausgestaltung des Luftleitungssicherungselements vor, dass der Grundkörper ein erstes Umfangsende und ein zweites Umfangsende aufweist, wobei das erste Umfangsende mit einem Rasthaken ausgebildet ist und das zweite Umfangsende einen Rastansatz aufweist, und wobei der Rasthaken und der Rastansatz im montierten Zustand eine lösbare Rastverbindung ausbilden. Folglich sind im montierten Zustand das erste Umfangsende und das zweite Umfangsende miteinander verbunden, so dass der Grundkörper eine geschlossene, ringförmige Gestalt aufweist. Durch Lösen der Rastverbindung kann im Bedarfsfall eine an dem Lüftungsgehäuse angebrachte Luftleitung wieder aus dem Anschlussstutzen herausgezogen und von dem Lüftungsgehäuse entfernt werden, weil das Luftleitungssicherungselement durch Lösen der Rastverbindung von dem Anschlussstutzen abnehmbar ist. Mit Hilfe der Rastverbindung sind folglich das erste Umfangsende und das zweite Umfangsende lösbar miteinander verbunden.

Erfindungsgemäß kann das Luftleitungssicherungselement Teil einer Anordnung zur lösbaren Befestigung einer rohrförmig und gewellt ausgebildeten Luftleitung an einem Anschlussstutzen eines Lüftungsgehäuses sein, wobei die Anordnung ein Lüftungsgehäuse mit wenigstens einem Anschlussstutzen, in welchem wenigstens eine Durchgangsöffnung ausgebildet ist, und wenigstens ein Luftleitungssicherungselement nach Anspruch 1 aufweist, wobei das Luftleitungssicherungselement in einem montierten Zustand den Anschlussstutzen umgreift und auf diesem aufliegt, wobei wenigstens ein Festlegungselement in dem montierten Zustand zumindest in einer in dem Anschlussstutzen ausgebildeten Durchgangsöffnung liegend und sich an einem Festlegungsabschnitt eines Randes der Durchgangsöffnung abstützend angeordnet ist, und wobei sich das wenigstens eine Rastelement in der Raststellung von dem Grundkörper aus nach innen erstreckt und in dem montierten Zustand durch die Durchgangsöffnung in den Anschlussstutzen hinein erstreckt.

Die Erfindung sieht in Ausgestaltung der Anordnung ferner vor, dass in dem montierten Zustand das Rastelement relativ zu dem Anschlussstutzen bewegbar an dem Grundkörper gelagert ist. Dementsprechend ist die Durchgangsöffnung in dem Anschlussstutzen derart zu dimensionieren, dass in dem montierten Zustand das Rastelement innerhalb der Durchgangsöffnung verschwenkbar ist, wobei in der Raststellung eine Seitenfläche des Rastelements derart an einem Stützabschnitt des Randes der Durchgangsöffnung anliegt, dass das Rastelement ausschließlich in Richtung des Lüftungsgehäuses schwenkbar ist. Dadurch, dass das Rastelement nur in Richtung des Lüftungsgehäuses schwenkbar ist, ist ein Herausziehen der gewellt ausgebildeten Luftleitung aus dem Anschlussstutzen nicht möglich, da die Schwenkbarkeit des Rastelements nur eine Bewegung der Luftleitung in Richtung des Lüftungsgehäuses zulässt.

Schließlich ist es in Ausgestaltung der Anordnung von Vorteil, wenn in dem montierten Zustand die Schwenkachse eine das Rastelement gegen den Stützabschnitt des Randes der Durchgangsöffnung drängende Rückstellkraft auf das Rastelement ausübend ausgebildet ist.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes und bevorzugtes Ausführungsbeispiel der Erfindung dargestellt ist.

In der Zeichnung zeigt:
Figur 1 eine perspektivische Ansicht auf ein Lüftungsgehäuse mit zwei Anschlussstutzen, an welchen jeweils ein erfindungsgemäßes Luftleitungssicherungselement angebracht ist,
Figur 2 die perspektivische Ansicht aus Figur 1, wobei die Luftleitungssicherungselemente von dem jeweiligen Anschlussstutzen separiert angeordnet sind,
Figur 3 eine vergrößerte Perspektivansicht auf einen Anschlussstutzen mit einem daran angebrachten Luftleitungssicherungselement,
Figur 4 eine vergrößerte, perspektivische Schnittansicht auf den Anschlussstutzen mit dem daran angebrachten Luftleitungssicherungselement,
Figur 5 eine Seitenansicht auf ein erfindungsgemäßes Luftleitungssicherungselement,
Figur 6 eine Perspektivansicht auf das in Figur 5 dargestellte Luftleitungssicherungselement,
Figur 7 eine vergrößerte Detailansicht für das erfindungsgemäße Luftleitungssicherungselement,
Figur 8 eine vergrößerte und perspektivische Schnittansicht für das erfindungsgemäße Luftleitungssicherungselement,
Figur 9 eine Schnittansicht eines ein Rastelement aufweisenden Abschnitts des Luftleitungssicherungselements, wobei das Rastelement in einer Raststellung angeordnet ist, und
Figur 10 eine Schnittansicht des ein Rastelement aufweisenden Abschnitts des Luftleitungssicherungselements, wobei das Rastelement aus der Raststellung verschwenkt angeordnet ist.

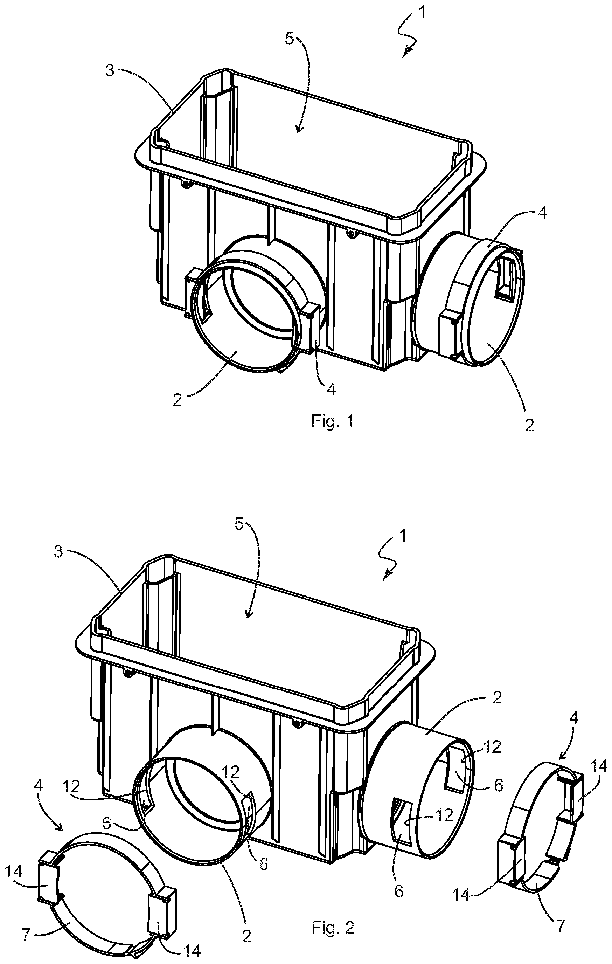

In den Figuren 1 und 2 ist eine erfindungsgemäße Anordnung 1 zur lösbaren Befestigung einer rohrförmig und gewellt ausgebildeten Luftleitung an einem Anschlussstutzen 2 eines Lüftungsgehäuses 3 gezeigt. Die Anordnung 1 umfasst das Lüftungsgehäuse 3, an welchem in dem dargestellten Ausführungsbeispiel zwei Anschlussstutzen 2 ausgebildet sind, und entsprechend zu den zwei Anschlussstutzen 2 zwei Luftleitungssicherungselemente 4, die jeweils an einem Anschlussstutzen 2 angebracht sind. Das Lüftungsgehäuse 3 weist ferner eine viereckige Ausnehmung 5 auf, welche einen Strömungsdurchlass für zu befördernde Luft darstellt, wobei die Luft entweder über den Strömungsdurchlass aus einem Wohnraum in das Lüftungsgehäuse 3 gesaugt oder aus dem Lüftungsgehäuse 3 in einen Wohnraum gefördert werden kann. Dabei wird auf oder in die Ausnehmung 5 ein in den Figuren nicht dargestelltes Abdeckgitter aufgesetzt, welches beispielsweise einen Filter aufweist. Aus den vorstehenden Ausführungen ergibt sich, dass es sich bei dem Lüftungsgehäuse 3 um ein sehr allgemeines Bauteil aus dem Bereich der Wohnraumlüftung handelt, welches wenigstens einen Anschlussstutzen 2 aufweist. Das Lüftungsgehäuse 3 kann im Sinne der Erfindung zum Beispiel ein Luftverteilergehäuse sein, so dass es in diesem Fall über eine Vielzahl von Anschlussstutzen verfügt.

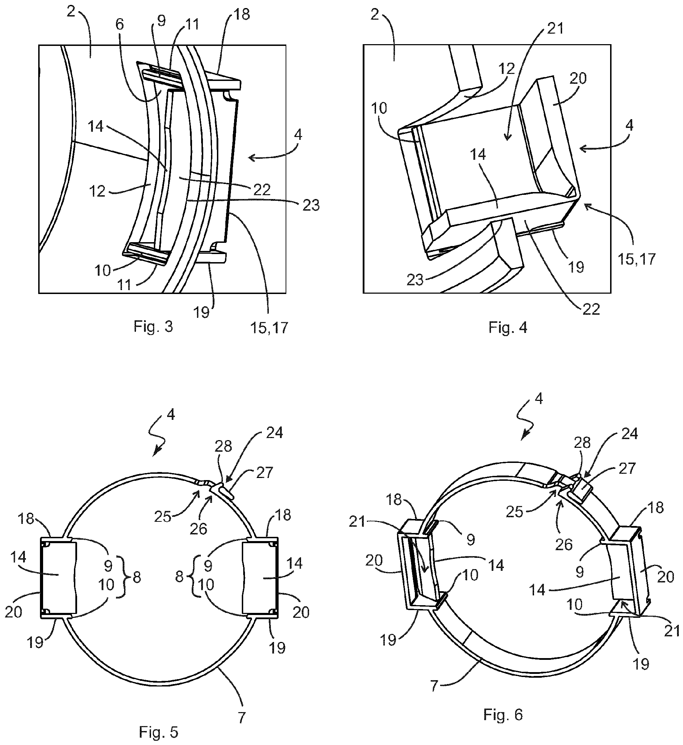

In der Figur 2 sind die zwei Luftleitungssicherungselemente 4, welche zur Fixierung einer rohrförmig und gewellt ausgebildeten Luftleitung an dem Lüftungsgehäuse 3 dienen, von den zwei Anschlussstutzen 2 entfernt angeordnet, wodurch erkennbar ist, dass in der Wandung eines jeweiligen Anschlussstutzens 2 zwei Durchgangsöffnungen 6 ausgebildet sind, die sich diametral gegenüberliegend angeordnet sind. Die zwei Durchgangsöffnungen 6 an den jeweiligen Anschlussstutzen 2 dienen dazu, die jeweiligen Luftleitungssicherungselemente 4 verdrehsicher an dem zugeordneten Anschlussstutzen 2 anzubringen. Zu diesem Zweck weist ein jeweiliges Luftleitungssicherungselement 4 einen Grundkörper 7 auf, welcher im Querschnitt eine ringförmige Gestalt ausbildet und welcher in einem an dem Anschlussstutzen 2 montierten Zustand (siehe Figur 1) den Anschlussstutzen 2 umgreift und auf diesem aufliegt. An dem Grundkörper 7 des Luftleitungssicherungselements 4 sind zwei Festlegungselemente 8 angeformt. In der vergrößerten Darstellung der Figur 3 ist eines der zwei Festlegungselemente 8 des Grundkörpers 7 ersichtlich, wobei das Festlegungselement 8 zwei Festlegungsansätze 9 und 10 umfasst. Die vergrößerte Ansicht der Figur 3 zeigt einen Anschlussstutzen 2, an welchem das Luftleitungssicherungselement 4 angebracht ist. Das Festlegungselement 8 erstreckt sich von dem Grundkörper 7 aus nach innen bzw. einwärts (siehe zum Beispiel auch Figur 5). In dem montierten Zustand des Luftleitungssicherungselements 4 (siehe zum Beispiel Figuren 1 und 3) ist das Festlegungselement 8 in einer der beiden in dem Anschlussstutzen 2 ausgebildeten Durchgangsöffnungen 6 liegend angeordnet, wobei sich das Festlegungselement 8 an einem Festlegungsabschnitt 11 eines Randes 12 der Durchgangsöffnung 6 abstützt, wodurch das Luftleitungssicherungselement 4 verdrehsicher an dem Anschlussstutzen 2 angebracht ist. Der Rand 12 der Durchgangsöffnung 6 dient folglich zumindest abschnittsweise als eine Abstützung für die Festlegungsansätze 9, 10 des Festlegungselements 8. Der Grundkörper 7 weist in dem dargestellten Ausführungsbeispiel die zwei Festlegungselemente 8 auf, die sich diametral gegenüberliegend an dem Grundkörper 7 angeordnet sind, wobei ein jeweiliges Festlegungselement 8 die zwei Festlegungsansätze 9 und 10 aufweist, die beabstandet zueinander an dem Grundkörper 7 angeformt sind, wie es beispielsweise der Figur 5 zu entnehmen ist, welche das Luftleitungssicherungselement 4 in einer Seitenansicht zeigt, woraus gut die im Querschnitt ringförmige Gestalt des Grundkörpers 7 ersichtlich ist. Die zwei Festlegungsansätze 9 und 10 sind derart beabstandet zueinander an dem Grundkörper 7 angeformt, dass sie in dem montierten Zustand an sich gegenüberliegenden Festlegungsabschnitten 11 des Randes 12 der Durchgangsöffnung 6 anliegen und den Grundkörper 7 verdrehsicher an dem Anschlussstutzen 2 anordnen.

Während die Festlegungselemente 8 zur verdrehsicheren Anbringung des Luftleitungssicherungselements 4 an einem der Anschlussstutzen 2 dient, sind zur Fixierung einer gewellt ausgebildeten Luftleitung an dem Grundkörper 7 des Luftleitungssicherungselements 4 zwei Rastelemente 14 angeformt, die ebenfalls sich diametral gegenüberliegend an dem Grundkörper 7 angeordnet sind. Die Rastelemente 14 erstrecken sich von dem Grundkörper 7 aus nach innen bzw. einwärts. Im montierten Zustand erstrecken sich die Rastelemente 14 durch die jeweiligen Durchgangsöffnungen 6 in den Anschlussstutzen 2 hinein, wie es insbesondere aus Figur 3 zu erkennen ist. Dabei sind die Rastelemente 14 bewegbar an dem Grundkörper 7 angebracht und können aus einer Raststellung (siehe zum Beispiel Figuren 3 und 4), in welcher die Rastelemente 14 in ein Wellental der Luftleitung eingreifen, herausbewegt werden. Die Beweglichkeit eines jeweiligen Rastelements 14 wird dabei durch eine Schwenkachse 15 realisiert, wie es zum Beispiel für das linke Rastelement 14 in Figur 6 gezeigt ist. Mit Hilfe der Schwenkachse 15 ist ein jeweiliges Rastelement 14 an dem Grundkörper 7 aus der Raststellung (siehe rechtes Rastelement 14 in Figur 6) in eine mit Bezug auf den Grundkörper 7 axiale Richtung 16 (siehe linkes Rastelement 14 in Figur 6) schwenkbar gelagert. Folglich ist ein jeweiliges Rastelement 14 relativ zu dem Festlegungselement 8 bewegbar an dem Grundkörper 7 gelagert, wobei in dem montierten Zustand das Rastelement 14 ferner relativ zu dem Anschlussstutzen 2 bewegbar an dem Grundkörper 7 gelagert ist.

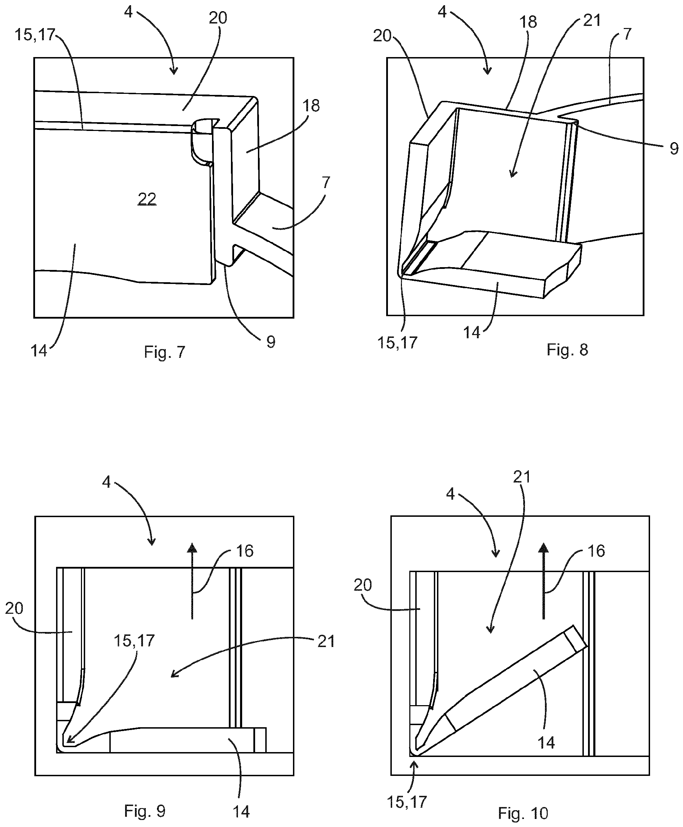

Mit Bezug auf die Figuren 4 und 7 bis 10 ist zu erkennen, dass die Schwenkachse 15 als ein Filmscharnier 17 ausgebildet ist, welche eine dünnwandige Verbindung des Rastelements 14 an dem Grundkörper 7 darstellt. Dabei ist die Schwenkachse 15 bzw. das Filmscharnier 17 derart ausgebildet, dass die Schwenkachse 15 bzw. das Filmscharnier 17 das jeweilige Rastelement 14 in der in Figur 9 gezeigten Raststellung hält oder bei einer aus der Raststellung verschwenkten Anordnung des Rastelements 14, wie es in Figur 10 dargestellt ist, eine das Rastelement 14 in die Raststellung zurückdrängende Rückstellkraft auf das Rastelement 14 ausübt. Die dünnwandige Verbindung zwischen dem Rastelement 14 und dem Grundkörper 7, welche die Schwenkachse 15 bzw. das Filmscharnier 17 bildet, ist beispielsweise aus den Figuren 4 und 8 ersichtlich, wobei die Schwenkachse 15 bzw. das Filmscharnier 17 das jeweilige Rastelement 14 in der Raststellung hält. Das Rastelement 14 ist in den Figuren 4, 8 und 9 in dieser Raststellung angeordnet. Dabei ist das jeweilige Rastelement 14 beim Einsteckvorgang einer Luftleitung in den Anschlussstutzen 2 in Richtung des Lüftungsgehäuses 3 in axialer Richtung 16 um die Schwenkachse 15 schwenkbar, wie es zum Beispiel in den Figuren 6 (linkes Rastelement 14) und 10 gezeigt ist. Das Rastelement 14 wird bei dem Einsteckvorgang von einem Wellenberg der Luftleitung verschwenkt und in Richtung des Lüftungsgehäuses 3 gedrängt, wohingegen die Rückstellkraft der Schwenkachse 15 bzw. des Filmscharniers 17 dafür sorgt, dass das Rastelement 14 wieder in die Raststellung zurückgedrängt wird, wenn der Wellenberg der Luftleitung das Rastelement 14 passiert hat, so dass das Rastelement 14 durch die Rückstellkraft der Schwenkachse 15 wieder in Richtung der Raststellung zurückgedrängt wird und in ein Wellental der Luftleitung eingreift. Entsprechend greift das Rastelement 14 zumindest abschnittsweise in ein Wellental der Luftleitung ein und fixiert dadurch die Luftleitung an dem Anschlussstutzen 2.

Wie beispielsweise die Figuren 3 bis 6 zeigen, ist eine jeweilige Schwenkachse 15 des Luftleitungssicherungselements 4 außerhalb des Grundkörpers 7 liegend angeordnet und verläuft als eine Passante an dem Grundkörper 7 vorbei. Dabei liegen sich die beiden Schwenkachsen 15 des Luftleitungssicherungselements 4 diametral gegenüber und verlaufen parallel zueinander. Wie insbesondere den Figuren 3, 5 und 7 zu entnehmen ist, ist ein jeweiliges Rastelement 14 zwischen den zwei Festlegungsansätzen 9, 10 eines jeweiligen Festlegungselements 8 angeordnet, wobei das jeweilige Rastelement 14 mit Hilfe der Schwenkachse 15 klappenartig an dem Grundkörper 7 gelagert ist. Dabei weist der Grundkörper 7 in den Bereichen, in denen die beiden Rastelemente 14 angeordnet sind, jeweils eine mit Bezug auf die ringförmig Gestalt des Grundkörper 7 nach außen versetzte und eckig verlaufende Form auf, die von zwei parallel verlaufenden und sich von dem Inneren des Grundkörpers 7 weg erstreckenden Stegen 18 und 19 und einer die beiden Stege 18, 19 verbindenden Seitenwand 20 gebildet ist. Entlang einer Kante dieser Seitenwand 20 verläuft die Schwenkachse 15, die in dem gezeigten Ausführungsbeispiel als dünnwandige Verbindung zu dem Rastelement 14 nach Art eines Filmscharnier 17 ausgebildet ist. Die Stege 18, 19 und die Seitenwand 20 sind ohrenförmig an dem Grundkörper 7 ausgebildet und bilden dabei einen Bewegungsraum 21 aus, welcher die Schwenkbewegung des Rastelements 14 aus der Raststellung ermöglicht, wobei die jeweilige Durchgangsöffnung 6 ferner so dimensioniert ist, um die Schwenkbewegung des jeweiligen Rastelements 14 zu gewährleisten. Damit das jeweilige Rastelement 14 nur in Richtung des Lüftungsgehäuses schwenken kann, wodurch ein Herausgleiten einer in den Anschlussstutzen 2 eingesteckten und durch das jeweilige Rastelement 14 fixierten Luftleitung verhindert wird, ist vorgesehen, dass in der Raststellung eine Seitenfläche 22 des Rastelements 14 derart an einem Stützabschnitt 23 des Randes 12 der Durchgangsöffnung 6 anliegt, dass das Rastelement 14 ausschließlich in Richtung des Lüftungsgehäuses 3 schwenkbar ist, wie es in den Figuren 4 und 5 zum Beispiel dargestellt ist. Erfindungsgemäß ist die Schwenkachse 15 derart ausgebildet, dass sie in dem montierten Zustand, wenn das Luftleitungssicherungselement 4 an dem Anschlussstutzen 2 angebracht ist, eine Rückstellkraft auf das Rastelement 14 ausübt, welche das Rastelement 14 gegen den Stützabschnitt 23 des Randes 12 der Durchgangsöffnung 6 drängt.

Damit eine auf die vorstehende Weise an dem Anschlussstutzen 2 fixierte Luftleitung wieder von dem Lüftungsgehäuse 3 im Bedarfsfall entfernt werden kann, ist eine lösbare Rastverbindung 24 für das Luftleitungssicherungselement 4 vorgesehen. Zu diesem Zweck weist der Grundkörper 7 ein erstes Umfangsende 25 und ein zweites Umfangsende 26 auf, wobei das erste Umfangsende 25 mit einem Rasthaken 27 ausgebildet ist und das zweite Umfangsende 26 einen Rastansatz 28 aufweist. Im montierten Zustand greift der Rasthaken 27 in den Rastansatz 28 ein, wodurch die lösbare Rastverbindung 24 ausgebildet ist. Folglich sind das erste Umfangsende 25 und das zweite Umfangsende 26 über die Rastverbindung 24 lösbar miteinander verbunden.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Beispielsweise kann in Abwandlung des in den Figuren gezeigten und vorstehend beschriebenen, konkreten Ausführungsbeispiel nur eine Durchgangsöffnung in dem Anschlussstutzen vorgesehen sein, so dass auch nur ein einziges Festlegungselement und ein einziges Rastelement an dem Grundkörper ausgebildet sein müssen. Die Erfindung wird in den angehängten Ansprüchen definiert.

## Patentansprüche

1. Luftleitungssicherungselement (4) zur lösbaren Befestigung einer rohrförmig und gewellt ausgebildeten Luftleitung an einem Anschlussstutzen (2) eines Lüftungsgehäuses (3),
wobei das Luftleitungssicherungselement (4) einen Grundkörper (7) aufweist, welcher im Querschnitt eine ringförmige Gestalt ausbildet und welcher in einem an dem Anschlussstutzen (2) montierten Zustand den Anschlussstutzen (2) umgreifen und auf diesem aufliegen kann,
wobei an dem Grundkörper (7) wenigstens ein Festlegungselement (8) angeformt ist, welches sich von dem Grundkörper (7) aus nach innen erstreckt und welches in dem montierten Zustand zumindest in einer in dem Anschlussstutzen (2) ausgebildeten Durchgangsöffnung (6) liegend und sich an einem Festlegungsabschnitt (11) eines Randes (12) der Durchgangsöffnung (6) abstützend angeordnet sein kann,
wobei an dem Grundkörper (7) wenigstens ein Rastelement (14) angeformt ist, welches sich in einer Raststellung, in welcher das wenigstens eine Rastelement (14) in ein Wellental der Luftleitung eingreifen kann, von dem Grundkörper (7) aus nach innen erstreckt und welches sich in dem montierten Zustand durch die Durchgangsöffnung (6) in den Anschlussstutzen (2) hinein erstrecken kann, und
wobei das wenigstens eine Rastelement (14) an dem Grundkörper (7) über eine Schwenkachse (15) aus der Raststellung in eine mit Bezug auf den Grundkörper (7) axiale Richtung (16) schwenkbar gelagert ist.

2. Luftleitungssicherungselement (4) nach Anspruch 1, wobei das Rastelement (14) relativ zu dem Festlegungselement (8) bewegbar an dem Grundkörper (7) gelagert ist.

3. Luftleitungssicherungselement (4) nach Anspruch 1 oder 2, wobei die Schwenkachse (15) eine das Rastelement (14) in der Raststellung haltende oder bei einer aus der Raststellung verschwenkten Anordnung des Rastelements (14) eine das Rastelement (14) in die Raststellung zurückdrängende Rückstellkraft auf das Rastelement (14) ausübend ausgebildet ist.

4. Luftleitungssicherungselement (4) nach einem der vorhergehenden Ansprüche, wobei die Schwenkachse (15) als ein Filmscharnier (17) ausgebildet ist.

5. Luftleitungssicherungselement (4) nach einem der vorhergehenden Ansprüche, wobei die Schwenkachse (15) außerhalb des Grundkörpers (7) liegend angeordnet ist.

6. Luftleitungssicherungselement (4) nach einem der vorhergehenden Ansprüche, wobei das Festlegungselement (8) zwei Festlegungsansätze (9, 10) aufweist, die beabstandet zueinander an dem Grundkörper (7) angeformt sind.

7. Luftleitungssicherungselement (4) nach Anspruch 6, wobei das Rastelement (14) zwischen den zwei Festlegungsansätzen (9, 10) angeordnet ist.

8. Luftleitungssicherungselement (4) nach einem der vorhergehenden Ansprüche, wobei der Grundkörper (7) ein erstes Umfangsende (25) und ein zweites Umfangsende (26) aufweist, wobei das erste Umfangsende (25) mit einem Rasthaken (27) ausgebildet ist und das zweite Umfangsende (26) einen Rastansatz (28) aufweist, und wobei der Rasthaken (27) und der Rastansatz (28) im montierten Zustand eine lösbare Rastverbindung (24) ausbilden.

9. Anordnung (1) zur lösbaren Befestigung einer rohrförmig und gewellt ausgebildeten Luftleitung an einem Anschlussstutzen (2) eines Lüftungsgehäuses (3), wobei die Anordnung (1) ein Lüftungsgehäuse (3) mit wenigstens einem Anschlussstutzen (2), in welchem wenigstens eine Durchgangsöffnung (6) ausgebildet ist, und wenigstens ein Luftleitungssicherungselement (4) nach Anspruch 1 aufweist, wobei das Luftleitungssicherungselement (4) in einem montierten Zustand den Anschlussstutzen (2) umgreift und auf diesem aufliegt, wobei das wenigstens ein Festlegungselement (8) in dem montierten Zustand zumindest in einer in dem Anschlussstutzen (2) ausgebildeten Durchgangsöffnung (6) liegend und sich an einem Festlegungsabschnitt (11) eines Randes (12) der Durchgangsöffnung (6) abstützend angeordnet ist, und wobei sich das wenigstens eine Rastelement (14) in der Raststellung von dem Grundkörper (7) aus nach innen erstreckt und in dem montierten Zustand durch die Durchgangsöffnung (6) in den Anschlussstutzen (2) hinein erstreckt.

10. Anordnung (1) nach Anspruch 9, wobei in dem montierten Zustand das Rastelement (14) relativ zu dem Anschlussstutzen (2) bewegbar an dem Grundkörper (7) gelagert ist.

11. Anordnung (1) nach Anspruch 9 oder 10, wobei in dem montierten Zustand das Rastelement (14) innerhalb der Durchgangsöffnung (6) verschwenkbar ist, wobei in der Raststellung eine Seitenfläche (22) des Rastelements (14) derart an einem Stützabschnitt (23) des Randes (12) der Durchgangsöffnung (6) anliegt, dass das Rastelement (14) ausschließlich in Richtung des Lüftungsgehäuses (3) schwenkbar ist.

12. Anordnung (1) nach Anspruch 11, wobei in dem montierten Zustand die Schwenkachse (15) eine das Rastelement (14) gegen den Stützabschnitt (23) des Randes (12) der Durchgangsöffnung (6) drängende Rückstellkraft auf das Rastelement (14) ausübend ausgebildet ist.

13. Anordnung (1) nach einem der Ansprüche 9 bis 12, wobei in dem montierten Zustand die Schwenkachse (15) außerhalb des Anschlussstutzens (2) liegend angeordnet ist.

14. Anordnung (1) nach einem der Ansprüche 9 bis 13, wobei in dem montierten Zustand das Festlegungselement (8) zwei Festlegungsansätze (9, 10) aufweist, die derart beabstandet zueinander an dem Grundkörper (7) angeformt sind, dass die Festlegungsansätze (9, 10) an sich gegenüberliegenden Festlegungsabschnitten (11) des Randes (12) der Durchgangsöffnung (6) anliegen und den Grundkörper (7) verdrehsicher an dem Anschlussstutzen (2) anordnen.

## Claims

1. An air conduit securing element (4) for detachably fastening a tubular and corrugated air conduit on a connecting branch (2) of a ventilation housing (3),
wherein the air conduit securing element (4) has a base body (7) that in a cross section has an annular shape and can encompass and rest on the connecting branch (2) in a state, in which it is mounted on the connecting branch (2),
wherein at least one fixing element (8) is integrally formed on the base body (7) and extends inward starting from the base body (7), which fixing element can in the mounted state be arranged such that it lies at least in a through-opening (6) formed in the connecting branch (2) and is supported on a fixing section (11) of an edge (12) of the through-opening (6),
wherein at least one catch element (14) is integrally formed on the base body (7) and extends inward starting from the base body (7) in an engaged position, in which the at least one catch element (14) can engage into a corrugation trough of the air conduit, which catch element can in the mounted state extend into the connecting branch (2) through the through-opening (6), and
wherein the at least one catch element (14) is supported on the base body (7) by means of a pivot pin (15) such that it is pivotable from the engaged position in an axial direction (16) referred to the base body (7).

2. The air conduit securing element (4) according to claim 1, wherein the catch element (14) is supported on the base body (7) such that it is moveable relative to the fixing element (8).

3. The air conduit securing element (4) according to claim 1 or 2, wherein the pivot pin (15) is designed for exerting a restoring force upon the catch element (14), which restoring force holds the catch element (14) in the engaged position or pushes the catch element (14) back into the engaged position when the catch element (14) is pivoted out of the engaged position.

4. The air conduit securing element (4) according to one of the preceding claims, wherein the pivot pin (15) is realized in the form of an integral hinge (17).

5. The air conduit securing element (4) according to one of the preceding claims, wherein the pivot pin (15) is arranged such that it lies outside the base body (7).

6. The air conduit securing element (4) according to one of the preceding claims, wherein the fixing element (8) has two fixing projections (9, 10), which are integrally formed on the base body (7) at a distance from one another.

7. The air conduit securing element (4) according to claim 6, wherein the catch element (14) is arranged between the two fixing projections (9, 10).

8. The air conduit securing element (4) according to one of the preceding claims, wherein the base body (7) has a first circumferential end (25) and a second circumferential end (26), wherein the first circumferential end (25) is realized with a catch hook (27) and the second circumferential end (26) has a catch projection (28), and wherein the catch hook (27) and the catch projection (28) form in the mounted state a separable catch connection (24) .

9. An arrangement (1) for detachably fastening a tubular and corrugated air conduit on a connecting branch (2) of a ventilation housing (3), wherein the arrangement (1) comprises a ventilation housing (3) with at least one connecting branch (2), in which at least one through-opening (6) is formed, and at least one air conduit securing element (4) according to claim 1, wherein the air conduit securing element (4) encompasses and rests on the connecting branch (2) in a mounted state, wherein the at least one fixing element (8) is in the mounted state arranged such that it lies at least in a through-opening (6) formed in the connecting branch (2) and is supported on a fixing section (11) of an edge (12) of the through-opening (6), and wherein the at least one catch element (14) extends inward starting from the base body (7) in the engaged position and into the connecting branch (2) through the through-opening (6) in the mounted state.

10. The arrangement (1) according to claim 9, wherein the catch element (14) is in the mounted state supported on the base body (7) such that it is moveable relative to the connecting branch (2).

11. The arrangement (1) according to claim 9 or 10, wherein the catch element (14) is in the mounted state pivotable within the through-opening (6), wherein a lateral surface (22) of the catch element (14) abuts in the engaged position on a supporting section (23) of the edge (12) of the through-opening (6) in such a way that the catch element (14) is pivotable exclusively in the direction of the ventilation housing (3).

12. The arrangement (1) according to claim 11, wherein the pivot pin (15) is in the mounted state designed for exerting a restoring force upon the catch element (14), which restoring force pushes the catch element (14) against the supporting section (23) of the edge (12) of the through-opening (6).

13. The arrangement (1) according to one of claims 9 to 12, wherein the pivot pin (15) is in the mounted state arranged such that it lies outside the connecting branch (2).

14. The arrangement (1) according to one of claims 9 to 13, wherein the fixing element (8) has in the mounted state two fixing projections (9, 10), which are integrally formed on the base body (7) at a distance from one another in such a way that the fixing projections (9, 10) abut on opposing fixing sections (11) of the edge (12) of the through-opening (6) and arrange the base body (7) on the connecting branch (2) in a rotationally fixed manner.

## Revendications

1. Élément de sécurisation d'une conduite d'air (4), destiné à la fixation désolidarisable d'une conduite d'air de conformation tubulaire et ondulée sur un manchon de raccordement (2) d'un carter de ventilation (3),
l'élément de sécurisation d'une conduite d'air (4) comportant un corps de base (7), qui dans la section transversale est de conception annulaire et qui à l'état monté sur le manchon de raccordement (2), est susceptible d'entourer le manchon de raccordement (2) et de reposer sur celui-ci,
sur le corps de base (7) étant surmoulé au moins un élément d'immobilisation (8), qui à partir du corps de base (7) s'étend vers l'intérieur et qui à l'état monté peut se placer de sorte à se situer dans un orifice de passage (6) formé dans le manchon de raccordement (2) et à s'appuyer sur un segment d'immobilisation (11) d'un bord (12) de l'orifice de passage (6),
sur le corps de base (7) étant surmoulé au moins un élément d'enclenchement (14), qui dans une position d'enclenchement dans laquelle l'au moins un élément d'enclenchement (14) est susceptible de s'engager dans un creux d'onde de la conduite d'air, s'étend à partir du corps de base (7) vers l'intérieur et qui à l'état monté, est susceptible de s'étendre à travers l'orifice de passage (6) jusqu'à l'intérieur du manchon de raccordement (2), et
l'au moins un élément d'enclenchement (14) étant logé sur le corps de base (7) en étant susceptible de pivoter par l'intermédiaire d'un axe de pivotement (15), de la position d'enclenchement dans une direction axiale (16) en rapport au corps de base (7).

2. Élément de sécurisation d'une conduite d'air (4) selon la revendication 1, l'élément d'enclenchement (14) étant mobile par rapport à l'élément d'immobilisation (8) et étant logé sur le corps de base (7).

3. Élément de sécurisation d'une conduite d'air (4) selon la revendication 1 ou 2, l'axe de pivotement (15) étant conçu de sorte à exercer sur l'élément d'enclenchement (14) une force de rappel maintenant l'élément d'enclenchement (14) dans la position d'enclenchement ou lorsque l'élément d'enclenchement (14) est pivoté hors de la position d'enclenchement, repoussant l'élément d'enclenchement (14) dans la position d'enclenchement.

4. Élément de sécurisation d'une conduite d'air (4) selon l'une quelconque des revendications précédentes, l'axe de pivotement (15) étant conçu sous la forme d'une charnière pelliculaire (17).

5. Élément de sécurisation d'une conduite d'air (4) selon l'une quelconque des revendications précédentes, l'axe de pivotement (15) étant placé se sorte à se situer à l'extérieur du corps de base (7).

6. Élément de sécurisation d'une conduite d'air (4) selon l'une quelconque des revendications précédentes, l'élément d'immobilisation (8) comportant deux embouts d'immobilisation (9, 10) qui sont surmoulés sur le corps de base (7) en étant écartés l'un de l'autre.

7. Élément de sécurisation d'une conduite d'air (4) selon la revendication 6, l'élément d'enclenchement (14) étant placé entre deux embouts d'immobilisation (9, 10).

8. Élément de sécurisation d'une conduite d'air (4) selon l'une quelconque des revendications précédentes, le corps de base (7) comportant une première extrémité périphérique (25) et une deuxième extrémité périphérique (26), la première extrémité périphérique (25) étant conçue avec un crochet d'enclenchement (27) et la deuxième extrémité périphérique (26) comportant un embout d'enclenchement (28), et à l'état monté, le crochet d'enclenchement (27) et l'embout d'enclenchement (28) formant une liaison par enclenchement (24) désolidarisable.

9. Ensemble (1), destiné à la fixation désolidarisable d'une conduite d'air de conformation tubulaire et ondulée sur un manchon de raccordement (2) d'un carter de ventilation (3), l'ensemble (1) comportant un carter de ventilation (3) doté d'au moins un manchon de raccordement (2), dans lequel est conçu au moins un orifice de passage (6) et au moins un élément de sécurisation d'une conduite d'air (4) selon la revendication 1, dans un état monté, l'élément de sécurisation d'une conduite d'air (4) entourant le manchon de raccordement (2) et reposant sur celui-ci, à l'état monté, l'au moins un élément d'immobilisation (8) étant placé de sorte à se situer dans un orifice de passage (6) formé dans le manchon de raccordement (2) et à s'appuyer sur un segment d'immobilisation (11) d'un bord (12) de l'orifice de passage (6), dans la positon d'enclenchement, l'au moins un élément d'enclenchement (14) s'étendant à partir du corps de base (7) vers l'intérieur et à l'état monté, s'étendant à travers l'orifice de passage (6) jusqu'à l'intérieur du manchon de raccordement (2).

10. Ensemble (1) selon la revendication 9, à l'état monté, l'élément d'enclenchement (14) étant logé sur le corps de base (7) en étant mobile par rapport au manchon de raccordement (2).

11. Ensemble (1) selon la revendication 9 ou 10, à l'état monté, l'élément d'enclenchement (14) étant susceptible de pivoter à l'intérieur de l'orifice de passage (6), dans la position d'enclenchement, une face latérale (22) de l'élément d'enclenchement (14) s'appuyant sur un segment de soutien (23) du bord (12) de l'orifice de passage (6), de telle sorte que l'élément d'enclenchement (14) soit susceptible de pivoter exclusivement dans la direction du carter de ventilation (3).

12. Ensemble (1) selon la revendication 11, à l'état monté, l'axe de pivotement (15) étant conçu de sorte à exercer sur l'élément d'enclenchement (14) une force de rappel poussant l'élément d'enclenchement (14) contre le segment de soutien (23) du bord (12) de l'orifice de passage (6).

13. Ensemble (1) selon l'une quelconque des revendications 9 à 12, à l'état monté, l'axe de pivotement (15) étant placé en se situant à l'extérieur du manchon de raccordement (2).

14. Ensemble (1) selon l'une quelconque des revendications 9 à 13, à l'état monté, l'élément d'immobilisation (8) comportant deux embouts d'immobilisation (9, 10) qui sont surmoulés sur le corps de base (7) en étant écartés l'un de l'autre, de telle sorte que les embouts d'immobilisation (9, 10) s'appuient sur des segments d'immobilisation (11) mutuellement opposés du bord (12) de l'orifice de passage (6) et placent le corps de base (7) de manière solidaire en rotation sur le manchon de raccordement (2).
